# EUROPEAN PATENT APPLICATION

(11) **EP 4 769 721 A1**
(43) Date of publication of application: **01.07.2026**
(21) Application number: 25845065.9
(22) Date of filing: 14.07.2025
(51) Int. Cl.: H01M 50/242, H01M 50/178, H01M 50/273, H01M 50/211, H01M 10/04

(54) **BATTERY CELL AND METHOD FOR MANUFACTURING SAME**

(30) Priority: 23.07.2024 KR 20240097194
(71) Applicant: LG Energy Solution, Ltd., Seoul 07335 (KR)
(72) Inventor: CHO, Kyu Sang, Daejeon 34122 (KR); KIM, Young Soon, Daejeon 34122 (KR)
(74) Representative: Goddar, Heinz J.
(86) International application number: PCT/KR2025/010283
(87) International publication number: WO 2026/023969

(57) **Abstract**

A battery cell according to an embodiment of the present disclosure may include an inner cell in which an electrode assembly is housed in a pouch-shaped outer packaging; a case accommodating the inner cell and having higher rigidity than the outer packaging; an end cover covering an end portion of the case and having an insulating material; and a pad disposed in close contact between an inner surface of the case and an outer surface of the inner cell and configured to elastically deform.

## Description

### TECHNICAL FIELD

### CROSS-REFERENCE TO RELATED APPLICATIONS

This application is based on and claims priority from Korean Patent Application No. 10-2024-0097194 filed on July 23, 2024 with the Korean Intellectual Property Office, the disclosure of which is incorporated herein in its entirety by reference.

### TECHNICAL FIELD

The present disclosure relates to a battery cell including an electrode assembly and a pouch-shaped outer packaging and a method for manufacturing the same.

### BACKGROUND

Secondary batteries can be recharged and do not need to be replaced, so they are suitable for use as built-in battery cells, and as secondary batteries are rapidly growing in stability and capacity, they are used in a wide range of device applications.

For example, secondary batteries are widely used as an energy source for multifunctional small products such as wireless mobile devices or wearable devices designed to be worn on the body, as well as an energy source for electric vehicles and hybrid electric vehicles proposed as an alternative to gasoline vehicles and diesel vehicles that cause air pollution or energy storage systems (ESSs).

In particular, to use secondary batteries as a large-capacity high-output energy source, battery modules including a plurality of battery cells or battery packs including a plurality of battery modules are being used. As secondary batteries are used as a large-capacity high-output energy source, ensuring safety of secondary batteries is critical.

Meanwhile, battery cells may be categorized into prismatic, pouch and cylindrical types according to the shape. Among them, pouch-type battery cells are relatively lightweight, have high energy density and are highly versatile in design. However, pouch-type battery cells have the advantages in thickness and weight but are vulnerable to external impacts and have high fire risks. In contrast, prismatic battery cells are relatively heavy but have high resistance to external impacts and achieve efficient heat dissipation.

As described above, each type of battery cell has its own advantages and disadvantages, so production line diversification will be desirable.

### DISCLOSURE

### TECHNICAL PROBLEM

The present disclosure is directed to providing a battery cell with improved safety that may be manufactured using a pouch-type battery cell and a method for manufacturing the same.

### TECHNICAL SOLUTION

A battery cell according to an embodiment of the present disclosure may include an inner cell in which an electrode assembly is housed in a pouch-shaped outer packaging; a case accommodating the inner cell and having higher rigidity than the outer packaging; an end cover covering an end portion of the case and having an insulating material; and a pad disposed in close contact between an inner surface of the case and an outer surface of the inner cell and configured to elastically deform.

An electrode lead of the inner cell may extend toward the end portion of the case and protrude outward from the end cover.

The pad may be attached to the outer surface of the inner cell.

The pad may include a pair of pads positioned at two sides of the inner cell in a thickness direction.

The end cover may have a groove through which an electrode lead of the inner cell passes.

The end cover may include a first end cover covering a part of the end portion of the case; and a second end cover covering other part of the end portion of the case, wherein the second end cover contacts the first end cover. An electrode lead of the inner cell may protrude out of the case through between the first end cover and the second end cover.

At least one of the first end cover or the second end cover may have a groove through which the electrode lead passes.

One inner cell may be housed in the case.

The case may include a base portion located at one side of the inner cell in a thickness direction; a pair of side portions facing each other with respect to a width direction of the inner cell and connected to the base portion; and a cover portion facing the base portion with the inner cell positioned therebetween and connecting the pair of side portions.

A method for manufacturing a battery cell according to an embodiment of the present disclosure may include the steps of preparing an inner cell in which an electrode assembly is housed in a pouch-shaped outer packaging; attaching a pad having an elastically deformable material to an outer surface of the inner cell; and placing the inner cell with the attached pad in a case assembly. The case assembly may include a case accommodating the inner cell and having higher rigidity than the outer packaging, wherein the case is separated into a case body and a case cover; and an end cover covering an end portion of the case and having an insulating material.

The step of placing the inner cell in the case assembly may include the steps of assembling a first end cover to the case body; placing the inner cell in the case body, wherein an electrode lead of the inner cell protrudes outward from the first end cover; assembling a second end cover to the first end cover and/or the case body, wherein the electrode lead protrudes outward through between the first end cover and the second end cover; and coupling the case cover to the case body.

### ADVANTAGEOUS EFFECTS

According to an exemplary embodiment of the present disclosure, safety of the battery cell may be increased and fire risks may be reduced by the rigid case and the shock absorbing pad.

Additionally, the assembly of the battery cell may be made easy by the end cover that insulates the electrode lead.

Furthermore, as the inner cell which is a pouch-type battery cell is included, it may be possible to use the existing pouch-type battery cell production line.

Besides, the effects of the present disclosure may include effects that can be easily predicted by those skilled in the art from the configurations according to the exemplary embodiments of the present disclosure.

### BRIEF DESCRIPTION OF THE DRAWINGS

The accompanying drawings illustrate the exemplary embodiments of the present disclosure and together with the following detailed description, serve to provide a better understanding of the technical aspects of the present disclosure, and thus the present disclosure should not be construed as being limited to the drawings.
FIG. 1 is a perspective view of a pouch-type battery cell.
FIG. 2 is a perspective view of a battery cell according to an embodiment of the present disclosure.
FIG. 3 is an exploded perspective view of the battery cell shown in FIG. 2.
FIG. 4 is a diagram showing a pad shown in FIG. 3, separated from an inner cell.
FIG. 5 is a flowchart of a method for manufacturing a battery cell according to another embodiment of the present disclosure.
FIG. 6 is a detailed flowchart of step S30 shown in FIG. 5.

### BEST MODE

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the subject matter of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, and rather, should be interpreted based on the meanings and concepts corresponding to the technical aspects of the present disclosure on the basis of the principle that the inventor is allowed to define the terms appropriately for the best explanation.

In the drawings, each component of a secondary battery according to an embodiment of the present disclosure is schematically depicted, and the size of the component or the thickness of the line may be exaggerated to some extent for convenience of understanding.

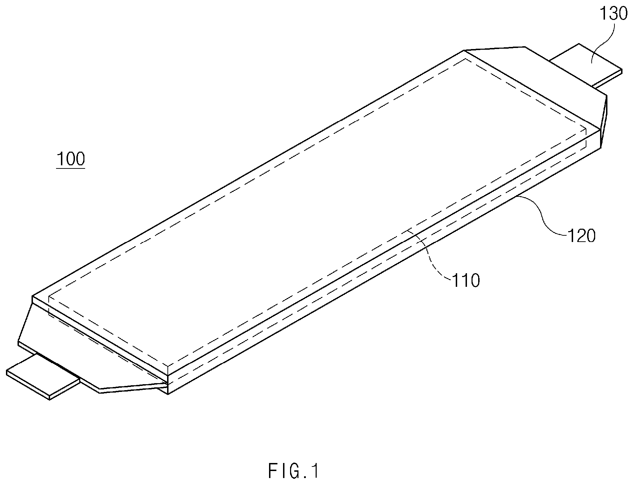

FIG. 1 is a perspective view of a pouch-type battery cell.

The pouch-type battery cell 100 may include an electrode assembly 110, a pouch-shaped outer packaging 120 and an electrode lead 130.

The electrode assembly 110 may be formed by placing a positive electrode and a negative electrode with a separator interposed between the positive electrode and the negative electrode. That is, the electrode assembly 110 may include the positive electrode, the negative electrode and the separator interposed between the positive electrode and the negative electrode to insulate them from each other. The type of the electrode assembly 110 may include a stack type, a jellyroll type, or a stack and folding type, but is not limited thereto.

The electrode assembly 110 may include an electrode tab connected to the electrode lead 130. The electrode tab may be formed by tailoring an uncoated portion of each of the positive electrode and the negative electrode or by connecting a conductor to the uncoated portion.

The electrode lead 130 may be connected to the electrode assembly 110, to be specific, the electrode tab. The electrode lead 130 may protrude out of the pouch-shaped outer packaging 120. The electrode lead 130 may include a pair of electrode leads electrically connected to the positive electrode and the negative electrode. For example, as shown in FIG. 1, the pair of electrode leads 130 may protrude toward two sides with respect to the length direction of the pouch-type battery cell 100. However, the present disclosure is not limited thereto, and the pair of electrode leads 130 may protrude side by side in the same direction.

The pouch-shaped outer packaging 120 may accommodate the electrode assembly 110. The pouch-shaped outer packaging 120 may be manufactured by forming a laminate sheet, and the laminate sheet may include a first resin layer (for example, polypropylene) located at one outermost side, a second resin layer (for example, polyethylene terephthalate) located at the other outermost side, and a metal layer (for example, aluminum) located between the first resin layer and the second resin layer.

By the configuration of the pouch-shaped outer packaging 120, the pouch-type battery cell 100 is relatively lightweight and has high energy density, but is vulnerable to external impacts and has high fire risks. The present disclosure aims at providing a battery cell 10 designed to overcome the disadvantages and its detailed description will be provided below.

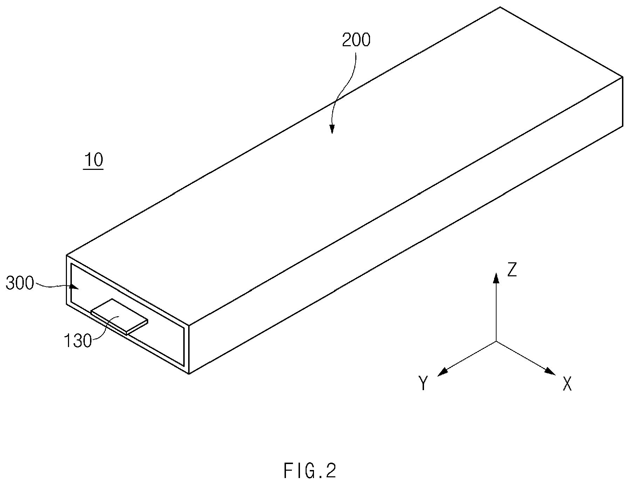

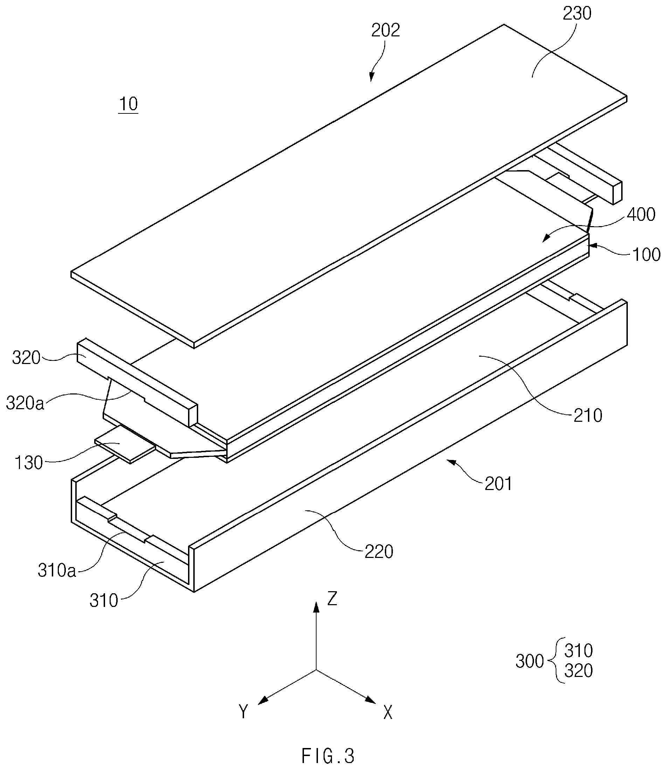

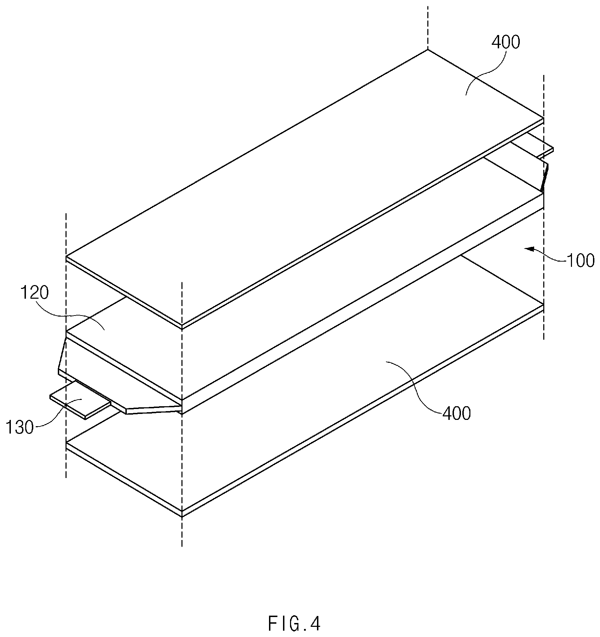

FIG. 2 is a perspective view of the battery cell according to an embodiment of the present disclosure, FIG. 3 is an exploded perspective view of the battery cell shown in FIG. 2, and FIG. 4 is a diagram showing a pad shown in FIG. 3, separated from an inner cell.

The battery cell 10 according to an embodiment of the present disclosure may include the inner cell 100, a case 200, an end cover 300 and the pad 400.

The inner cell 100 may include an electrode assembly 110 housed in a pouch-shaped outer packaging 120. That is, the inner cell 100 may be the above-described pouch-type battery cell 100, and reference is made to the above description.

The case 200 may accommodate the inner cell 100 and have higher rigidity than the inner cell 100. Preferably, one inner cell 100 may be housed in the case 200. Accordingly, the battery cell 10 may replace the existing pouch-type battery cell. However, if necessary, a plurality of inner cells 100 may be housed in the case 200.

For example, the case 200 may have a metal material. That is, the case 200 may be manufactured by processing and joining metal plates. The thickness of the metal plates that form the case 200 may be larger than the thickness of the laminate sheet of which the pouch-shaped outer packaging 120 of the inner cell 100 is made.

Because the case 200 has relatively high rigidity, the case 200 may protect the inner cell 100 from external impacts. In addition, the case 200 may slow down or prevent the spread of flames and gases when a fire occurs due to abnormal operation of the inner cell 100.

Additionally, the case 200 may be surface-treated with a metal (for example, aluminum) having corrosion resistance to an electrolyte.

The case 200 may have a shape that conforms to the inner cell 100. More specifically, the case 200 may have a predetermined thickness parallel to the thickness direction (parallel to the Z axis in FIG. 3) of the inner cell 100, a predetermined width parallel to the width direction (parallel to the X axis in FIG. 3) of the inner cell 100 and a predetermined length parallel to the length direction (parallel to the Y axis in FIG. 3) of the inner cell 100. The thickness dimension, the width dimension and the length dimension of the case 200 may increase in that order.

The case 200 may have a shape that surrounds the inner cell 100. The case 200 may have, at two ends, an opening that is covered by the end cover 300 as described below.

More specifically, the case 200 may include a base portion 210, a pair of side portions 220 and a cover portion 230.

The base portion 210 may be located at one side of the inner cell 100 in the thickness direction (parallel to the Z axis in FIG. 3).

The pair of side portions 220 may be connected to the base portion 210, facing each other with respect to the width direction (parallel to the X axis in FIG. 3) of the inner cell 100.

The cover portion 230 may face the base portion 210 with the inner cell 100 positioned between them, and may connect the pair of side parts 220.

The base portion 210 and the cover portion 230 may be each in a shape of a plate facing the inner cell 100 in the thickness direction. The side portions 220 may be each in a shape of a plate facing the inner cell 100 in the width direction. On the basis of the directions shown in FIGS. 2 and 3, the base portion 210 may define the bottom surface of the case 200, the side portions 220 may define the sides of the case 200, and the cover portion 230 may define the top surface of the case 200.

The base portion 210, the pair of side portions 220 and the cover portion 230 may be separate respective components, but are not limited thereto, and at least some of them may be connected into one.

The case 200 may be separated into a case body 201 and a case cover 202. That is, the case body 201 and the case cover 202 may be detachably joined to each other. The case body 201 may include some of the base portion 210, the pair of side portions 220 and the cover portion 230, and the case cover 202 may include the others.

For example, as shown in FIG. 3, the case body 201 may include the base portion 210 and the pair of side portions 220, and the case cover 202 may include the cover portion 230.

As the case body 201 and the case cover 202 are detachably joined to each other, it may ease the insertion of the inner cell 100 into the case 200 and the assembly of the end cover 300 as described below.

Meanwhile, the end cover 300 may cover the end portion of the case 200. More specifically, the case 200 may have the opening at the end in the length direction, and the end cover 300 may cover the opening.

The end cover 300 may include a pair of end covers to cover two end portions of the case 200. Each end cover 300 may have an insulating material. For example, the end cover 300 may include a polymer resin material such as polypropylene. Accordingly, the end cover 300 may insulate the electrode lead 130 of the inner cell 100 from the case 200.

More specifically, each end cover 300 may include a first end cover 310 covering a part of the end portion of the case 200 and a second end cover 320 covering the other part of the end portion of the case 200. The first end cover 310 and the second end cover 320 may contact each other. The first end cover 310 and the second end cover 320 may be arranged along the thickness direction of the inner cell 100. The first end cover 310 and the second end cover 320 may extend in the width direction of the inner cell 100.

That is, the first end cover 310 and the second end cover 320 may cover the opening at the end of the case 200 together.

The electrode lead 130 of the inner cell 100 may protrude out of the case 200 through between the first end cover 310 and the second end cover 320. Accordingly, the electrode lead 130 may be connected to an external load located outside the case 200. In addition, it may ease the assembly of the inner cell 100 and the end cover 300.

The end cover 300 may have grooves 310a, 320a through which the electrode lead 120 of the inner cell 100 passes. More specifically, at least one of the first end cover 310 or the second end cover 320 may have the grooves 310a, 320a through which the electrode lead 130 passes. For example, the first end cover 310 may have the first groove 310a, and the second end cover 320 may have the second groove 320a. The first groove 310a and the second groove 320a may face each other to form a hole through which the electrode lead 130 passes together. However, the present disclosure is not limited thereto, and only one of the first groove 310a or the second groove 320a may be formed.

Meanwhile, the pad 400 may be placed in close contact between the inner surface of the case 200 and the outer surface of the inner cell 100 and configured to elastically deform. The pad 400 may be a foam pad made of an elastically deformable material such as polyurethane.

More specifically, when the inner cell 100 swells, the pad 400 may be compressed between the inner surface of the case 200 and the outer surface of the inner cell 100. Accordingly, the pad 400 may suppress the swelling of the inner cell 100. In addition, the pad 400 may protect the inner cell 100 from external impacts.

The size of the pad 400 may be identical or similar to the size of the electrode assembly 110 of the inner cell 100. The pad 400 may be attached to the outer surface of the inner cell 100, to be specific, the outer surface of the outer packaging 120. That is, an adhesive layer may be present between the pad 400 and the outer packaging 120.

The pad 400 may include a pair of pads 400 positioned at two sides of the inner cell 100 in the thickness direction. More specifically, the pads 400 may be attached to two surfaces of the inner cell 100.

By the above-described configuration of the battery cell 10, the battery cell 10 may have advantages of safety against external impacts and lower fire risks.

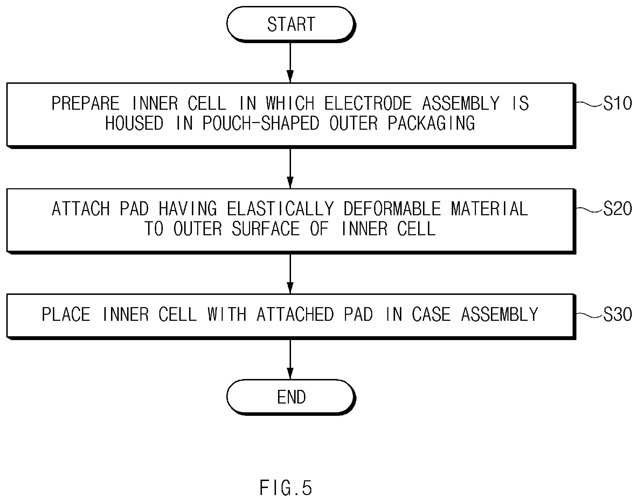

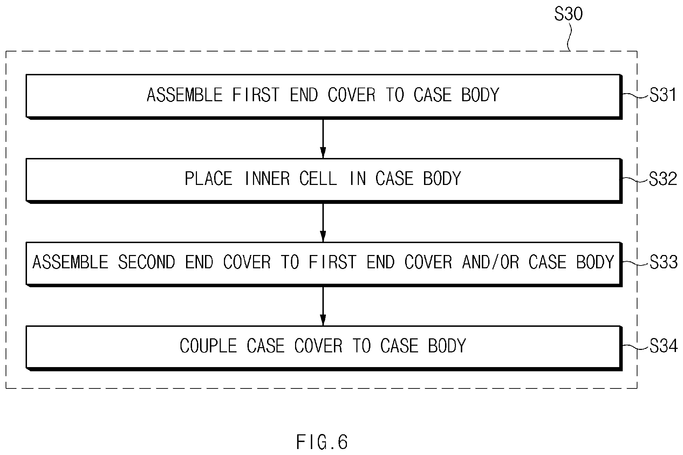

FIG. 5 is a flowchart of a method for manufacturing a battery cell according to another embodiment of the present disclosure, and FIG. 6 is a detailed flowchart of step S30 shown in FIG. 5.

Hereinafter, the method for manufacturing the above-described battery cell 100 will be described as another embodiment of the present disclosure.

The method for manufacturing the battery cell (hereinafter, 'manufacturing method') according to another embodiment of the present disclosure may include the steps of (S10) preparing the inner cell 100 in which the electrode assembly 110 is housed in the pouch-shaped outer packaging 120, (S20) attaching the pad 400 having the elastically deformable material to the outer surface of the inner cell 100, and (S30) placing the inner cell 100 with the attached pad 400 in a case assembly. The case assembly may include the case 200 and the end cover 300. That is, the case 200 and the end cover 300 assembled together may form the case assembly.

The step (S10) of preparing the inner cell 100 may be the same as the manufacture of the existing pouch-type battery cell. That is, there is an advantage that it is possible to utilize the production facility for manufacturing the existing pouch-type battery cell.

In the step (S20) of attaching the pad 400 to the inner cell 100, the pad 400 may be attached to the two surfaces of the inner cell 100 in the thickness direction. Accordingly, it is possible to easily place the inner cell 100 and the pad 400 in the case assembly.

The step (S30) of placing the inner cell 100 with the attached pad 400 in the case assembly may include the steps of (S31) assembling the first end cover 310 to the case body 201, (S32) placing the inner cell 100 in the case body 201, (S33) assembling the second end cover 320 to the first end cover 310 and/or the case body 201, and (S34) coupling the case cover 202 to the case body 201.

In the step (S31) of assembling the first end cover 310 to the case body 201, the first end cover 310 may be assembled to the end portion of the case body 201.

In the step (S32) of placing the inner cell 100 in the case body 201, the electrode lead 130 of the inner cell 100 may protrude outward from the first end cover 310. More specifically, a part of the electrode lead 130 may be located on the first groove 310a of the first end cover 310, and the other part may protrude outward from the first end cover 310. In addition, the pad 400 attached to one surface of the inner cell 100 may contact the inner surface of the base portion 210 of the case body 201.

In the step (S33) of assembling the second end cover 320 to the first end cover 310 and/or the case body 201, the electrode lead 130 may protrude outward through between the first end cover 310 and the second end cover 320. More specifically, the electrode lead 130 may protrude outward through the first groove 310a and/or the second groove 320a. In addition, the first end cover 310 and the second end cover 320 may be positioned in contact with each other.

In the step (S34) of coupling the case cover 202 to the case body 201, the pad 400 attached to the other surface of the inner cell 100 may contact the inner surface of the cover portion 230 of the case cover 202.

By the series of processes, the inner cell 100 may be easily housed in the case assembly. That is, there is an advantage that it is possible to easily manufacture the battery cell 100 using the existing pouch-type battery cell.

While the foregoing is provided to describe the technical aspects of the present disclosure by way of illustration, persons having ordinary skill in the technical field pertaining to the present disclosure will appreciate that a variety of changes and modifications may be made thereto without departing from the essential features of the present disclosure.

Therefore, the disclosed embodiments are provided to describe the technical aspects of the present disclosure but not intended to be limiting, and the technical scope of the present disclosure is not limited by these embodiments.

The scope of protection of the present disclosure should be interpreted by the appended claims, and it should be understood that the scope of protection of the present disclosure encompasses all the technical aspects within the equivalent scope.

### [List of Reference Numerals]

10: Battery cell
100: Inner cell
110: Electrode assembly
120: Pouch-shaped outer packaging
130: Electrode lead
200: Case
201: Case body
202: Case cover
210: Base portion
220: Side portion
230: Cover portion
300: End cover
310: First end cover
320: Second end cover
400: Pad

## Claims

1. A battery cell comprising:
an inner cell in which an electrode assembly is housed in a pouch-shaped outer packaging;
a case accommodating the inner cell and having higher rigidity than the outer packaging;
an end cover covering an end portion of the case and having an insulating material; and
a pad disposed in close contact between an inner surface of the case and an outer surface of the inner cell and configured to elastically deform.

2. The battery cell according to claim 1,
wherein an electrode lead of the inner cell extends toward the end portion of the case and protrudes outward from the end cover.

3. The battery cell according to claim 1,
wherein the pad is attached to the outer surface of the inner cell.

4. The battery cell according to claim 1,
wherein the pad includes a pair of pads positioned at two sides of the inner cell in a thickness direction.

5. The battery cell according to claim 1,
wherein the end cover has a groove through which an electrode lead of the inner cell passes.

6. The battery cell according to claim 1,
wherein the end cover includes:
a first end cover covering a part of the end portion of the case; and
a second end cover covering other part of the end portion of the case, wherein the second end cover contacts the first end cover, and
wherein an electrode lead of the inner cell protrudes out of the case through between the first end cover and the second end cover.

7. The battery cell according to claim 6,
wherein at least one of the first end cover or the second end cover has a groove through which the electrode lead passes.

8. The battery cell according to claim 1,
wherein one inner cell is housed in the case.

9. The battery cell according to claim 1,
wherein the case includes:
a base portion located at one side of the inner cell in a thickness direction;
a pair of side portions facing each other with respect to a width direction of the inner cell and connected to the base portion; and
a cover portion facing the base portion with the inner cell positioned therebetween and connecting the pair of side portions.

10. A method for manufacturing a battery cell, the method comprising the steps of:
preparing an inner cell in which an electrode assembly is housed in a pouch-shaped outer packaging;
attaching a pad having an elastically deformable material to an outer surface of the inner cell; and
placing the inner cell with the attached pad in a case assembly,
wherein the case assembly includes:
a case accommodating the inner cell and having higher rigidity than the outer packaging, wherein the case is separated into a case body and a case cover; and
an end cover covering an end portion of the case and having an insulating material.

11. The method for manufacturing the battery cell according to claim 10,
wherein the step of placing the inner cell in the case assembly includes the steps of:
assembling a first end cover to the case body;
placing the inner cell in the case body, wherein an electrode lead of the inner cell protrudes outward from the first end cover;
assembling a second end cover to the first end cover and/or the case body, wherein the electrode lead protrudes outward through between the first end cover and the second end cover; and
coupling the case cover to the case body.
